# EUROPEAN PATENT APPLICATION

(11) **EP 3 756 640 A1**
(43) Date of publication of application: **30.12.2020**
(21) Application number: 19182700.5
(22) Date of filing: 26.06.2019
(51) Int. Cl.: A61J 3/10, B30B 11/00, B65G 51/00

(54) **SYSTEM AND METHOD FOR CONTINUOUS PRODUCTION OF SOLID DOSAGE FORMS**

(71) Applicant: Fette Compacting GmbH, 21493 Schwarzenbek (DE)
(72) Inventor: Vanderputten, Joris, 1501 Buizingen (BE); Verheyen, Jozef, 2640 Mortsel (BE); Schoeters, Kris, 3010 Kessel-Lo (BE); Walter, Nicolas, 22149 Hamburg (DE); Kolbe, Sven, 21514 Büchen (DE)
(74) Representative: Hauck Patentanwaltspartnerschaft mbB

(57) **Abstract**

The invention pertains to a system for continuous production of solid dosage forms comprising a first inlet for a first powder, a second inlet for a second powder, and a mixing device for providing a mixture from the first and second powder, wherein the mixing device comprises an outlet for the mixture, a production machine for continuously producing solid dosage forms from the mixture, wherein the production machine comprises a powder feed frame with a feed frame inlet, being connected with the outlet of the mixing device, and an outlet for discharging produced solid dosage forms, wherein the outlet of the mixing device is positioned at a lower level than the feed frame inlet of the production machine, and a product conveying device is positioned in the connection between the outlet of the mixing device and the feed frame inlet of the production machine, said product conveying device conveying the product mixture.

## Description

The invention pertains to a system for continuous production of solid dosage forms in direct processing, comprising a first inlet for a first powder product, a second inlet for a second powder product, and a mixing device for continuously providing a product mixture from the first and second powder product, wherein the mixing device comprises an inlet, being connected with the first inlet for the first powder product and the second inlet for the second powder product, and an outlet for the product mixture, further comprising a production machine for continuously producing solid dosage forms from the product mixture, wherein the production machine comprises a powder feed frame with a feed frame inlet, being connected with the outlet of the mixing device, and an outlet for discharging produced solid dosage forms.

The invention further pertains to a method for continuous production of solid dosage forms in direct processing, comprising the steps of continuously providing a first powder product and a second powder product to a mixing device, continuously providing a product mixture from the first and second powder product with the mixing device, continuously providing the product mixture to a production machine, continuously producing solid dosage forms from the product mixture with the production machine and discharging solid dosage forms from the production machine.

Solid dosage forms or oral solid dosages (OSD), such as tablets or capsules, can be produced for example in tablet presses, for example rotary tablet presses, or capsule filling machines. In continuous production lines a powder mixture of for example at least one active pharmaceutical ingredient (API) and at least one excipient is continuously provided by a mixing device and fed for example to the tablet press or the capsule filling machine. The powder products to be mixed in the mixing device can be provided continuously at inlets of the continuous production line. Feeding and dosing devices can be provided for feeding and dosing the ingredients to be processed. Such a production process is also referred to as a direct processing or, in particular with regard to tablet presses, direct compression process, in contrast to a granulation process where additional devices and process steps are employed, such as dry or wet granulators, and potentially dryers, to improve the processability, such as flowability or compressibility, of a product not suited for direct processing.

A system and method for continuous production of solid dosage forms are known for example from EP 3 013 571 A1. The components of the system, in particular the feeding and dosing devices, the mixing device, and the tablet press, are stacked vertically so that the product(s) flow(s) from the feeding and dosing devices to the mixing device and to the tablet press via gravity. This makes product flow in the system reliable, simple and cost-efficient. However, the current inventors have found that this system design, which is common throughout the current field of continuous production of solid dosage forms, has certain disadvantages. One disadvantage is the considerable height of the overall system of up to 5 m and more. In practice systems can exceed a height of 7 m. This requires specific production rooms providing the necessary room height, making it difficult to use standard production rooms. Also, for operator personnel being able to access system components, such as the feeding and dosing devices or the mixing device, the installation of specific operator platforms is necessary, making the system design more complicated and costly as well as complex to access and having a large overall footprint, due to use of stairs and platforms for operator access.

Alternatively to operator platforms, lifting systems combined with automatic coupling and decoupling systems could be used to allow for operator access to the system components. Such lifting and automatic coupling systems also make system design and and use complicated and costly.

EP 2 427 166 B1 discloses in one embodiment a contained module for production of tablets comprising a granulating device which is installed on a post hoist to allow manual powder loading, cleaning, inspection, maintenance, and set-up at a lower vertical position and to be hoisted above a subsequently arranged dryer for a gravitational feed from the granulating device into the dryer. Alternatively, a pneumatic conveying device may be provided for conveying material from the granulating device to the dryer, and possibly from the dryer to a subsequently arranged tablet press. This module according to EP 2 427 166 B1 is thus not a direct compression module, but rather contains a granulating device.

In direct processing systems a considerable problem lies in a possible segregation of the product mixture after mixing. For instance a single ingredient can segregate from the mixture because the ingredient's particles are not bonded with the other ingredient's particles by a granulation process. This can cause a non-homogenous mixture with a too high or too low concentration of this ingredient in the product mixture. This, in turn, can lead to quality issues in the produced solid dosages. Therefore, it has been preferred to directly feed powder product from the mixing device to the production machine, such as a tablet press, via gravity, leading to the above discussed drawbacks inter alia regarding system height. In non-direct processing systems with granulating devices, such as the module described in EP 2 427 166 B1, this problem of segregation is not of particular relevance, in particular due to the bonding between the different ingredient's particles through the granulation process.

Based on the prior art discussed above, it is an object of the present invention to provide a system and method for continuous production of solid dosage forms in direct processing which can be constructed, installed and utilized in a simple and cost-efficient manner.

The invention solves this object with the system according to independent claim 1 and the method according to independent claim 12. The dependent claims, as well as the specification and drawings, contain advantageous embodiments.

For a system of the above discussed type the invention solves the object in that the outlet of the mixing device is positioned at a lower level than the feed frame inlet of the production machine, and in that a product conveying device is positioned in the connection between the outlet of the mixing device and the feed frame inlet of the production machine, said product conveying device continuously conveying the product mixture from the outlet of the mixing device to the feed frame inlet of the production machine.

For a method of the above discussed type, the invention solves the object in that the product mixture provided by the mixing device is provided at an outlet of the mixing device which is arranged at a lower level than a feed frame inlet of the production machine for the product mixture, and in that the product mixture is conveyed from the outlet of the mixing device to the feed frame inlet of the production machine with a product conveying device arranged in the connection between the outlet of the mixing device and the feed frame inlet of the production machine.

The solid dosage forms produced with the inventive system and method are in particular oral solid dosages (OSD). They are produced from dry powder materials fed to the inventive system through the first and second inlet. As explained above, the invention pertains to a direct processing system and method. In particular in systems including a tablet press this is also referred to as a direct compression system and method. In the inventive direct processing system and method a first dry powder product, such as an active pharmaceutical ingredient (API) is continuously blended with a second dry powder product, for example an excipient, in a mixing device. The mixing device is a dry powder mixing device. The mixing device is not a granulation device. Directly following the blending step solid dosage forms are continuously produced in a production machine, for example tablets by compression of the powder products in a tablet press. No additional devices or steps are necessary, like granulation devices or drying devices or steps or the like. The inventive system and method in particular do not contain a granulation device or process, or a drying device or process.

The mixing device can be any type of continuously operating dry powder mixing or blending device, where infeed and outfeed are continuous product streams. The mixing device could for example be a screw blender. The mixing device can comprise a mixing tube. The mixing tube can for example be arranged substantially horizontally. The inlet or the inlets of the mixing device can be provided at the upper side of the mixing tube. The outlet can be arranged at the lower side of the mixing tube.

As indicated, the first product may for example be an API. The second product may for example be an excipient. Of course, more than the first and second powder products can be fed to and processed in the inventive system and method, for example one or more further APIs or one or more further excipients, such as one or more lubricants. To this end the inventive system can comprise more inlets for further powder products to be mixed and processed. The mixing device may have a joint inlet for the first and second powder product. However, the inlet of the mixing device connected with the first and second inlet for the first and second powder product could also comprise two separate inlets, one connected with the first inlet for the first powder product and one connected with the second inlet for the second powder product. Also, the mixing device may comprise further inlets for further powder products, for example a further excipient, such as a lubricant. The mixing device could for example comprise a first common inlet for an API and a first excipient, and a second inlet for a further excipient, such as a lubricant. For example if a common inlet for the powder products from the first and second inlets is provided, a hopper may be provided between the first and second inlets and the inlet of the mixing device collecting and feeding to the mixing device the materials to be mixed.

The connections between the components of the inventive system can be provided in the form of pipes or the like. The inlets and outlets of the system and its components may be designed detachable, such that they can be detached from a respective connection. However, they may also be non-detachable such that they are fixedly connected with the respective connection they are fitted to, for example integrated with the respective connection. The inlets and outlets of the system and its components may have closure devices for closing off the respective connection they are fitted to. However, they may also be provided without such closure devices such that access to the respective connection may be always open.

According to the invention the outlet of the mixing device is positioned at a lower height than the powder feed frame inlet of the production machine. The powder feed frame denotes the part of the production machine where the powder material to be processed in the production machine is collected before processing. For example in tablet presses the feed frame usually comprises a filler housing, in which for example rotating paddles are arranged which keep the powder in flowing condition such that the powder can be filled into dies of a rotor of the tablet press. For example in capsule filling machines the feed frame usually also comprises a filler housing, in which powder is collected before being filled into capsules, in particular before being fed to a tamping station for slight compaction of the powder before filling into capsules. The feed frame inlet may for example be arranged inside a housing of the production machine and for example above the feed frame of a tablet press or the tamping station of a capsule filling machine. Due to the inventive design the product mixture provided at the outlet of the mixing device must be lifted to the higher feed frame inlet of the production machine. For this purpose a product conveying device is provided which conveys the powder product mixture from the outlet of the mixing device, being arranged at the lower height, to the feed frame inlet of the production machine, being arranged at the greater height. The powder product conveying device thus lifts the powder product mixture from a lower vertical level to a higher vertical level. The product conveying device may have an inlet at a lower level, connected with the outlet of the mixing device, and an outlet at a higher level, connected with the feed frame inlet of the production machine. The inlet and outlet of the product conveying device may be arranged such that the powder mixture may flow via gravity from the outlet of the mixing unit to the inlet of the product conveying device and, once having been conveyed to the higher level, may flow via gravity from the outlet of the product conveying device to the feed frame inlet of the production machine.

The inventors of the current invention have found that with this design a reliable transport of the powder product mixture and a reliable production of solid dosage forms from the powder mixture in the production machine meeting all quality requirements is possible also in continuous direct processing systems and methods. In particular, the inventors have found that with the inventive design with a powder product conveying device segregation of the product mixture can be avoided to the necessary extent. Based on this finding of the inventors, the invention makes it possible to position the mixing device, as well as the first inlet and second inlet, beside the production machine, instead of above the production machine, also in direct processing systems. The production machine and the mixing device, as well as the first and second inlet, and potentially any further components of the system, can be installed on the same floor level, in particular within a considerably reduced height compared with prior art systems. The inventive system and method therefore allow a simple and cost-efficient installation in standard production rooms already existing without the necessity of large modifications or even building new production rooms, also for direct processing systems. No operator platform for accessing certain components of the system is necessary. Also, no lifting devices for lifting components of the system up and down or automatic coupling and decoupling devices are necessary. The inventive system may accordingly be provided without any such lifting device or automatic coupling and decoupling devices or any operator platform for accessing components of the inventive system, for example for set-up, disassembly, cleaning, maintenance or repair. Rather, the system generally provides for better accessibility and ergonomics for setup, inspection, cleaning, disassembling, maintenance or repair as well as product changeover. Additionally, the elimination of operator platforms reduces the footprint of the production line. The inventive system is more compact, easier and faster to install and to start up. At the same time all advantages of a continuous direct processing system and method can be realised. A compact unit, such as the inventive system, can also be made mobile, allowing it to be moved from one production room to another. The inventive powder conveying device allows for example the mixing device as well as potential feeding and dosing devices to be remotely set up from the production machine in the same room or in adjacent rooms. Integration of powder diverter mechanisms between the mixing device and production machine to reject out of specification material, becomes easier. Of course, the inventive system is also more cost-efficient than multiple level complex systems of the prior art.

The inventive system may be a contained system, for example with a containment level for product toxicity level OEB3 or higher.

According to an embodiment, the production machine may be a tablet press or a capsule filling machine. The solid dosage forms may accordingly be tablets or capsules. The tablet press may in particular be a rotary tablet press.

According to a further embodiment the first inlet for the first powder product and the second inlet for the second powder product may be arranged at a level not higher than the production machine or the product conveying device. The first and second inlet may in particular be positioned such that they do not extend to a level above the production machine or the product conveying device. The product conveying device, or its outlet for discharging conveyed product mixture to the feed frame inlet of the production machine, may extend higher than the feed frame inlet of the production machine. In this case the first and second inlets may be provided not higher than the product conveying device or its outlet. When further inlets for further powder products are provided, then this embodiment can apply to them as well. The above embodiment leads to a further reduction in height.

According to a further embodiment a feeding and dosing device may be connected with each of the first and second inlets for the first and second powder product, and with the inlet of the mixing device. The feeding and dosing devices may for example be loss-in-weight feeders. The feeding and dosing devices can be arranged in the respective connection between the first and second inlets and the inlet of the mixing device.

According to a further embodiment the feeding and dosing devices may be arranged in one, two, or more than two rows, in particular along one, two, or more than two horizontal axes. If more than one row of feeding and dosing devices is provided the rows may be arranged for example along parallel horizontal axes. This arrangement contributes further to a compact design, unlike arrangements along a circle, which have been suggested in the prior art.

According to a further embodiment the feeding and dosing devices may be arranged at a level not higher than the production machine or the product conveying device. The feeding and dosing devices may in particular be positioned such that they do not extend to a level above the production machine or the product conveying device. The feeding and dosing devices may also be arranged beside the production machine. The product conveying device, or its outlet for discharging conveyed product mixture to the feed frame inlet of the production machine, may extend higher than the feed frame inlet of the production machine. In this case the feeding and dosing devices may be provided not higher than the product conveying device or its outlet.

According to a further embodiment leading to a particular compact design, the feeding and dosing devices may form a feeding, dosing and mixing module together with the mixing device. The feeding, dosing and mixing module may be arranged in a module housing. This embodiment also allows for easily meeting containment requirements. Also, providing the feeding, dosing and mixing module allows for providing the module mobile, such that the feeding, dosing and mixing module can be moved from a production site to a different place, such as a different production site. The module housing may have the same height or a smaller height than a production machine housing.

According to a further embodiment the module housing may form a system housing together with a housing of the production machine, for example a tablet press housing or a capsule filling machine housing. The module housing is thus integrated or connected with the production machine housing. This leads to a particular compact design, again allowing to easily meet containment requirements.

According to a further embodiment a height difference between the outlet of the mixing device and the feed frame inlet of the production machine may be more than 0.50 m, preferably more than 1 m, more preferably more than 1.50 m. The product mixture may be conveyed with the product conveying device from the outlet of the mixing device to the feed frame inlet of the production machine over a height difference of more than 0.50 m, preferably more than 1 m, more preferably more than 1.50 m. The height difference corresponds to the vertical lift of the product mixture the product conveying device has to carry out. It may preferably be about 2 m.

According to a further embodiment the overall height of the system may be less than 3.50 m, preferably less than 3 m, more preferably less than 2.50 m. The overall height denotes the height from the floor level the system is installed on up to the first and second inlets of the system. Such a small height of the system is made possible by the inventive system design and allows using standard rooms with improved accessibility of the system components.

According to a further embodiment the product conveying device may be a pneumatic product conveying device, for example a dense phase pneumatic product conveying device. The conveying device may also be a powder pump, preferably a powder membrane pump. Such conveying devices are particularly suited for the inventive purpose to convey the mixed powder material from the outlet of the mixing device to the feed frame inlet of the production machine without the occurrence of critical segregation. However, other conveying devices are also feasible, for example the conveying device may also be a dilute phase pneumatic product conveying device, or a screw conveyor device, for example a rigid or flexible screw conveyor device, or for example a bucket lift conveyor, a disk conveyor system, or a transport belt.

Control of the mixing device, the product conveying device, the first and second inlets and/or potential feeding and dosing devices may be carried out through individual control units or a central control unit. For example, the mentioned components may be controlled by the same control unit as the production machine, for example a control unit of a tablet press or capsule filling machine. This makes control of the system particularly easy with the possibility of remote control from a separate room, thereby further improving operator safety.

The inventive method may be carried out with the inventive system. Accordingly, the inventive system may be designed to carry out the inventive method.

An embodiment of the invention is explained in more detail below with reference to drawings. The drawings schematically show:
- Figure 1: a system according to the invention in a first perspective view,
- Figure 2: the system shown in Figure 1 in a further perspective view.

In the drawings the same reference numerals shall denote the same parts.

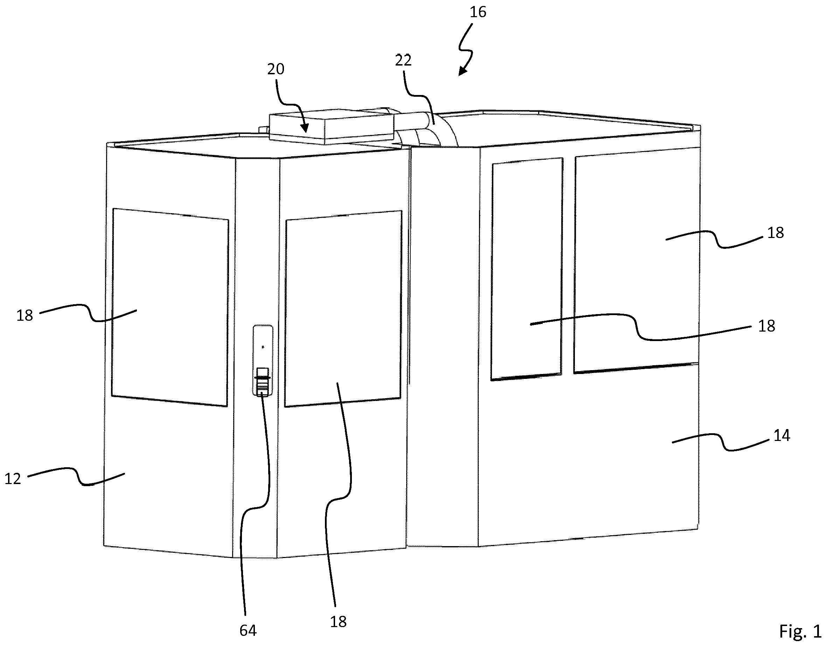

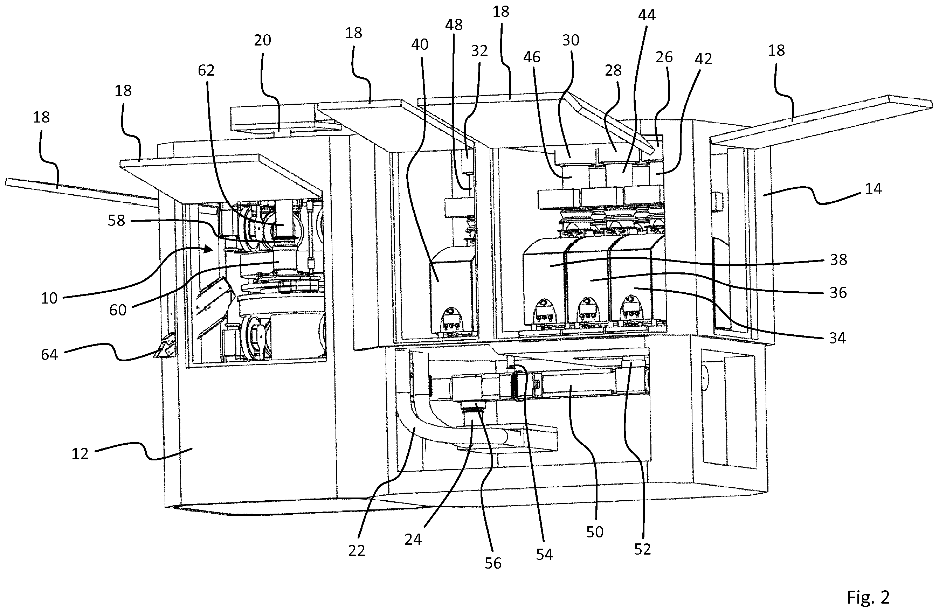

The inventive system for continuous production of solid dosage forms in direct processing shown in Figure 1 and Figure 2 comprises a production machine 10, in the shown example a rotary tablet press 10. The tablet press 10 is arranged in a production machine housing 12, in the shown example a tablet press housing 12. The tablet press housing 12 is integrated with a module housing 14 which contains a feeding, dosing and mixing module explained in more detail in the following. The tablet press housing 12 forms a system housing 16 together with the module housing 14. The system housing 16 comprises a plurality of windows 18 which may be opened in order to access components of the system. While in Figure 1 the windows 18 are shown in their closed position, in Figure 2 the windows 18 are shown in their open position for better explanation of the system components. A lower part of the module housing 14 is further cut away in Figure 2 for a better understanding of the system design. As can be seen for example in Figure 1 the tablet press housing 12 and the module housing 14 have essentially the same height. At the top of the system housing 16 the outlet 20 of a product conveying device 22 of the system can be seen. The inlet of the product conveying device 22 can be seen in Figure 2 at reference numeral 24.

In Figure 2 a first inlet 26 for a first powder product, such as an API, and a second inlet 28 for a second powder product, such as an excipient, can be seen. Furthermore, a third inlet 30 for a third powder product and a fourth inlet 32 for a fourth powder product can be seen in Figure 2. The third powder product may for example be a further API or a further excipient. The fourth powder product may for example be an excipient, such as a lubricant. Each of the inlets 26, 28, 30, 32 is connected with a subsequent feeding and dosing device 34, 36, 38, 40 through a refill system 42, 44, 46, 48. Each of the feeding and dosing devices 34, 36, 38, 40 may be a loss-in-weight feeder. As can be seen in Figure 2 the feeding and dosing devices 34, 36, 38, 40 are arranged in a row, in particular along a horizontal axis.

The feeding and dosing devices 34, 36, 38 and 40 are on the other hand connected with a mixing device 50. The mixing device 50 may generally be any type of dry powder mixer or blender. Mixing device 50 has a first inlet 52 which is connected with the feeding and dosing devices 34, 36, 38. A second inlet 54 of the mixing device 50 is connected with the feeding and dosing device 40. The mixing device 50 further has an outlet 56 which is connected with the inlet 24 of the product conveying device 22. The outlet 20 of the product conveying device 22 is connected with a feed frame inlet 58 of a feed frame 60 of the tablet press 10. The outlet 20 of the product conveying device 22 and the feed frame inlet 58 of the feed frame 60 of the tablet press 10 are connected through a vertical tube 62. The tablet press 10 further has an outlet 64 for discharging produced tablets.

In the following the inventive method carried out with the inventive system will be explained. During production the first, second and third powder product, provided at the first, second and third inlet 26, 28 and 30 are continuously provided to the first inlet 52 of the mixing device 50 through the feeding and dosing devices 34, 36 and 38. The fourth powder product provided at the fourth inlet 32 is continuously provided to the second inlet 54 of the mixing device 50 through the feeding and dosing device 40. The mixing device 50 continuously produces and provides at its outlet 56 a powder product mixture of the four powder products. The product mixture is continuously fed to the inlet 24 of the product conveying device 22. As can be seen for example in Figure 2 the inlet 24 of the product conveying device 22 is positioned below the outlet 56 of the mixing device 50 such that the product mixture can flow from the outlet 56 to the inlet 24 via gravity. As can further be seen in Figure 2 the outlet 56 of the mixing device 50, and thus of course also the inlet 24 of the product conveying device 22, are arranged at a lower height than the feed frame inlet 58 of the tablet press 10, and also than the outlet 20 of the product conveying device 22, said outlet 20 being positioned above the feed frame inlet 58 of the tablet press 10. The product conveying device 22 continuously conveys the product mixture fed to its inlet 24 to its outlet 20, and thus vertically lifts the product mixture to a greater height. From the outlet 20 the lifted product mixture is fed continuously to the feed frame inlet 58 of the tablet press 10 via gravity, said tablet press 10 continuously producing tablets from the fed product mixture and discharging the produced tablets at its outlet 64.

According to the above explained system design it is possible to restrict the overall height of the system to less than 3.50 m, preferably less than 3 m, more preferably less than 2.50 m. To this end the product mixture may be vertically lifted by the product conveying device 22 over a height of more than 1.50 m, for example roughly 2 m. It can be seen in Figures 1 and 2 that the system inlets 26, 28, 30 and 32, and thus also the feeding and dosing devices 34, 36, 38 and 40, are arranged such that they do not extend above the height of the product conveying device 22 with its outlet 20. The above explained system and method design allows for a particularly compact construction with simple installation and improved accessibility of the system components, as explained above.

### List of reference numerals

- 10: production machine
- 12: production machine housing
- 14: module housing
- 16: system housing
- 18: windows
- 20: outlet of product conveying device
- 22: product conveying device
- 24: inlet of product conveying device
- 26: first inlet
- 28: second inlet
- 30: third inlet
- 32: fourth inlet
- 34, 36, 38, 40: feeding and dosing devices
- 42, 44, 46, 48: refill systems
- 50: mixing device
- 52: first inlet of mixing device
- 54: second inlet of mixing device
- 56: outlet of mixing device
- 58: feed frame inlet of production machine
- 60: feed frame of production machine
- 62: vertical tube
- 64: outlet of production machine

## Claims

1. System for continuous production of solid dosage forms in direct processing, comprising a first inlet (26) for a first powder product, a second inlet (28) for a second powder product, and a mixing device (50) for continuously providing a product mixture from the first and second powder product, wherein the mixing device (50) comprises an inlet (52), being connected with the first inlet (26) for the first powder product and the second inlet (28) for the second powder product, and an outlet (56) for the product mixture, further comprising a production machine (10) for continuously producing solid dosage forms from the product mixture, wherein the production machine (10) comprises a powder feed frame (60) with a feed frame inlet (58), being connected with the outlet (56) of the mixing device (50), and an outlet (64) for discharging produced solid dosage forms,
**characterized in that** the outlet (56) of the mixing device (50) is positioned at a lower level than the feed frame inlet (58) of the production machine (10), and **in that** a product conveying device (22) is positioned in the connection between the outlet (56) of the mixing device (50) and the feed frame inlet (58) of the production machine (10), said product conveying device (22) continuously conveying the product mixture from the outlet (56) of the mixing device (50) to the feed frame inlet (58) of the production machine (10).

2. System according to claim 1, **characterized in that** the production machine (10) is a tablet press (10) or a capsule filling machine.

3. System according to one of the preceding claims, **characterized in that** the first inlet (26) for the first powder product and the second inlet (28) for the second powder product are arranged at a level not higher than the production machine (10) or the product conveying device (22).

4. System according to one of the preceding claims, **characterized in that** a feeding and dosing device (34, 36, 38, 40) is connected with each of the first and second inlets (26, 28) for the first and second powder product, and with the inlet (52) of the mixing device (50).

5. System according to claim 4, **characterized in that** the feeding and dosing devices (34, 36, 38, 40) are arranged in one, two, or more than two rows.

6. System according to one of claims 4 or 5, **characterized in that** the feeding and dosing devices (34, 36, 38, 40) together with the mixing device (50) form a feeding, dosing and mixing module, said feeding, dosing and mixing module preferably being arranged in a module housing (14).

7. System according to claim 6, **characterized in that** the module housing (14) together with a housing (12) of the production machine (10) forms a system housing (16).

8. System according to one of the preceding claims, **characterized in that** a height difference between the outlet (56) of the mixing device (50) and the feed frame inlet (58) of the production machine (10) is more than 0.50 m, preferably more than 1 m, more preferably more than 1.50 m.

9. System according to one of the preceding claims, **characterized in that** the overall height of the system is less than 3.50 m, preferably less than 3 m, more preferably less than 2.50 m.

10. System according to one of claims 1 to 9, **characterized in that** the product conveying device (22) is a pneumatic product conveying device, preferably a dense phase pneumatic product conveying device.

11. System according to one of claims 1 to 9, **characterized in that** the product conveying device (22) is a powder pump, preferably a powder membrane pump.

12. Method for continuous production of solid dosage forms in direct processing, comprising the steps of continuously providing a first powder product and a second powder product to a mixing device (50), continuously providing a product mixture from the first and second powder product with the mixing device (50), continuously providing the product mixture to a production machine (10), continuously producing solid dosage forms from the product mixture with the production machine (10) and discharging solid dosage forms from the production machine (10),
**characterized in that** the product mixture provided by the mixing device (50) is provided at an outlet (56) of the mixing device (50) which is arranged at a lower level than a feed frame inlet (58) of the production machine (10) for the product mixture, and **in that** the product mixture is conveyed from the outlet (56) of the mixing device (50) to the feed frame inlet (58) of the production machine (10) with a product conveying device (22) arranged in the connection between the outlet (56) of the mixing device (50) and the feed frame inlet (58) of the production machine (10).

13. Method according to claim 12, **characterized in that** the solid dosage forms are tablets or capsules.

14. Method according to one of claims 12 or 13, **characterized in that** the product mixture is conveyed with the product conveying device (22) from the outlet (56) of the mixing device (50) to the feed frame inlet (58) of the production machine (10) over a height difference of more than 0.50 m, preferably more than 1 m, more preferably more than 1.50 m.

15. Method according to one of claims 12 to 14, **characterized in that** it is carried out with a system according to one of claims 1 to 11.
